# EUROPÄISCHE PATENTSCHRIFT

(11) **EP 0 550 481 B1**
(45) Veröffentlichungstag und Bekanntmachung des Hinweises auf die Patenterteilung: **05.07.1995**
(21) Anmeldenummer: 91916028.3
(22) Anmeldetag: 20.09.1991
(51) Int. Cl.: C11D 3/39, C11D 17/00, C01B 15/12, D06L 3/02

(54) **BLEICHMITTELZUBEREITUNG**
BLEACHING COMPOSITION
COMPOSITION DE BLANCHIMENT

(30) Priorität: 29.09.1990 DE 4030850
(43) Veröffentlichungstag der Anmeldung: 14.07.1993
(73) Patentinhaber: Henkel Kommanditgesellschaft auf Aktien, 40191 Düsseldorf (DE)
(72) Erfinder: BEAUJEAN, Hans-Josef, D-4010 Hilden (DE); SCHWADTKE, Karl, D-5090 Leverkusen (DE); HOLZ, Erich, D-4000 Düsseldorf (DE)
(86) Internationale Anmeldenummer: EP9101795
(87) Internationale Veröffentlichungsnummer: WO9206166

(56) Entgegenhaltungen:
- DE-A- 2 448 716
- DE-A- 3 704 876
- DE-B- 1 267 368
- DE-B- 1 279 878
- US-A- 3 658 712
- DERWENT ACCESSION, no. 87-070 314, Questel Telesystems (WPIL), DERWENTPUBLICATIONS LTD., London, & JP, A, 62-025 198

## Beschreibung

Die vorliegende Erfindung liegt auf dem Gebiet der anorganischen Peroxyverbindungen, die vor allem bei der Textilwäsche als Bleichmittel eingesetzt werden.

Auf dem Gebiet der Textilwäsche kennt man seit langer Zeit pulverförmige Mittel, die sämtliche Wirkstoffe, die für die Wäsche notwendig sind, enthalten und gleichzeitig eine hinreichende Lagerstabilität im festen Zustand aufweisen. Flüssige Textilwaschmittel hingegen, die in jüngerer Zeit verstärkt entwickelt werden, besitzen häufig aufgrund von Wechselwirkungen zwischen einzelnen Inhaltsstoffen nur sehr begrenzte Lagerstabilität. Vor allem die Einarbeitung von Bleichmitteln in flüssige Systeme bereitet große Probleme. Stellvertretend für die zahlreichen Vorschläge auf diesem Gebiet seien hier nur die beiden deutschen Auslegeschriften 1 267 368 und 1 279 878 und die deutsche Offenlegungsschrift 3 704 876 genannt. Nicht zuletzt wegen des bisher ungelösten Problems der Unverträglichkeit zwischen Bleichmittel und anderen Waschmittelinhaltsstoffen wurde als Alternative die getrennte Dosierung des Bleichmittels vorgeschlagen, wobei als Bleichmittel in der Mehrzahl der Fälle wäßrige Lösungen von Wasserstoffperoxid verwendet werden. Wegen der ätzenden Eigenschaften von Wasserstoffperoxid müssen diese Lösungen zumindest für den Bereich der Haushaltswäsche sehr verdünnt sein und enthalten demzufolge nur wenig Aktivsauerstoff.

Die vorliegende Erfindung bietet eine andere Lösung des Problems in Form einer pastenförmigen Zubereitung von Perboratmonohydrat. Diese Zubereitung enthält 40 bis 70 Gew.-%, vorzugsweise 50 bis 65 Gew.-% an Perboratmonohydrat in einem flüssigen Medium, das überwiegend oder vollständig aus Additionsprodukten von Ethylenoxid (EO) und langkettigen gesättigten Alkoholen besteht.

Die neuen pastenförmigen Zubereitungen von Perboratmonohydrat sind chemisch und physikalisch außerordentlich stabil und lassen sich leicht und bequem handhaben und dosieren. Sie lösen sich schnell in Wasser oder Waschlaugen auf, so daß der hohe Gehalt an Aktivsauerstoff in kürzester Zeit voll zur Verfügung steht.

Bei dem erfindungsgemäß verwendeten Perboratmonohydrat handelt es sich um Alkaliperborat, insbesondere um Natriumperboratmonohydrat, dem im allgemeinen die Formel NaBO₃ . H₂O zugeordnet wird. In Wirklichkeit handelt es sich bei Natriumperboratmonohydrat nach heutigem Wissen um ein cyclisches Diperoxodiborat mit der Formel Na₂H₄B₂O₈, das kein Hydratwasser enthält. Der theoretische Gehalt an Aktivsauerstoff beträgt 16,0 Gewichtsprozent, doch sollen im Sinne der vorliegenden Erfindung auch solche Natriumperborate als Monohydrate angesehen werden, die wenigstens 15 Gewichtsprozent an Aktivsauerstoff enthalten.

In den erfindungsgemäßen pastenförmigen Zubereitungen liegt das Perboratmonohydrat gegebenenfalls zusammen mit weiteren Feststoffen suspendiert in einem flüssigen Medium vor, das überwiegend oder vollständig aus bestimmten nichtionischen Tensiden besteht.

Bei den erfindungsgemäß zu verwendenden nichtionischen Tensiden handelt es sich um vorzugsweise flüssige Additionsprodukte aus Ethylenoxid und langkettigen gesättigten Alkoholen, deren Stockpunkt insbesondere bei 10 °C oder darunter liegt. Besonders bevorzugt werden Additionsprodukte aus 2 bis 7 Mol Ethylenoxid und langkettigen gesättigten Alkoholen mit 12 bis 18 C-Atomen. Diese Additionsprodukte stellen im allgemeinen Gemische von mehr oder weniger stark ethoxylierten Alkoholen dar, d. h. die Zahlenangaben stellen Mittelwerte dar, und die Produkte selbst können auch gewisse Anteile an höher oder niedriger ethoxylierten Verbindungen enthalten. Unter Umständen kann es zweckmäßig sein, ein Gemisch zweier Additionsprodukte mit einem höheren und einem niedrigeren mittleren Ethoylierrnngsgrad zu verwenden. Es ist ebenfalls möglich, bis zu einem Drittel der nichtionischen Tenside dieses Typs durch andere nichtionische Tenside, beispielsweise Ethoxylierungsprodukte von Alkylphenolen oder gemischte Additionsprodukte aus Ethylenoxid und Propylenoxid zu ersetzen, sofern dieses Gemisch von nichtionischen Tensiden, gegebenenfalls zusammen mit weiteren organischen Flüssigkeiten, bei Zimmertemperatur, vorzugsweise hinunter bis zu 10 °C flüssig bleibt. Beispiele für geeignete nichtionische Tenside sind die Additionsprodukte aus 2 Mol Ethylenoxid und C₁₂/₁₄-Kokosalkohol (Dehydol ^{(R)}LS 2), aus 5 Mol Ethylenoxid und C₁₂/₁₈-Kokosalkohol (Dehydol ^{(R)} LT 5) und das Additionsprodukt aus 7 Mol Ethylenoxid und C_{13/15}-Oxoalkohol (Lutensol ^{(R)} A 07).

Die flüssige Phase der nichtionischen Tenside kann weitere organische Flüssigkeiten enthalten, die bis zu 10 Gewichtsprozent, vorzugsweise 3 bis 10 Gewichtsprozent der Gesamtzubereitung ausmachen können. Diese organischen Flüssigkeiten dienen in erster Linie der richtigen Einstellung der Gesamtviskosität und Konsistenz. Selbstverständlich dürfen auch diese Flüssigkeiten keine Unverträglichkeiten mit den anderen Bestandteilen der Zubereitungen zeigen. Vorzugsweise werden deshalb diese Flüssigkeiten ausgewählt aus der Gruppe Paraffinöl, Polypropylenglykol (Molekulargewicht zwischen etwa 200 und etwa 400), Propylencarbonat, Ethanol, Isopropanol und deren Mischungen. Paraffinöl mit Siedebereichen zwischen etwa 250 und etwa 500 °C wird besonders bevorzugt. Wasser wirkt sich negativ auf die Stabilität der erfindungsgemäßen Mittel aus; aus diesem Grunde werden die Bestandteile so ausgesucht, daß der Gesamtgehalt an Wasser in den Mitteln unter 3 Gew.-%, insbesondere nicht über 1 Gew.-% liegt.

Außer den bereits genannten Bestandteilen können die Zubereitungen noch weitere Wirk- und Hilfsstoffe in Mengen bis zu 10 Gewichtsprozent, vorzugsweise 2 bis 10 Gewichtsprozent, bezogen auf das Gesamtgewicht der Zubereitung gelöst oder in dispergierter Form enthalten. Die Aufgabe dieser Zusätze kann verschiedenster Art sein. So dienen Zusätze von Alkalimetallseifen der Viskositätserhöhung der flüssigen Phase. Schwermetallkomplexbildner, wie Aminopolycarbonsäuren und Polyphosphonsäuren, beispielsweise Ethylendiamintetraessigsäure und Hydroxyethandiphosphonsäure bzw. deren Alkalisalze, haben die Aufgabe, die Zersetzung des Perboratmonohydrats durch Schwermetallspuren zu vermeiden. Durch den Zusatz weiterer Wirkstoffe ist es möglich, bei der Anwendung der Zubereitungen neben dem eigentlichen Effekt des Perboratmonohydrats weitere Wirkungen, die im Waschprozeß erwünscht sind, zusätzlich zu erzielen. Beispiele derartiger Wirkstoffe sind Vergrauungsinhibitoren, beispielsweise Carboxymethylcellulose und Hydroxyethylcellulose, sowie optische Aufheller. Durch den Zusatz wasserfreier anorganischer Salze kann ein gewisser Verdünnungseffekt erreicht werden, wenn das nötig sein sollte.

Die Herstellung der erfindungsgemäßen Zubereitungen kann im einfachsten Falle durch ausreichend langes Mischen aller Komponenten erfolgen. Dies ist besonders dann möglich, wenn alle Feststoffe, die in der Flüssigkeit suspendiert werden sollen, in ausreichender Feinheit zur Verfügung stehen. Vorzugsweise liegen die suspendierten Feststoffe in den Pasten zu mehr als 90 Gewichtsprozent in Form von Teilchen mit einem Durchmesser unterhalb 50 »m, vorzugsweise unterhalb 25 »m vor (meßbar mit Hilfe eines Teilchengrößenanalysators vom Typ Helos Sympatec - Meßprinzip: Frauenhoferbeugung). Die Viskosität der Zubereitungen hängt einerseits vom Feststoffgehalt, andererseits aber auch von der Viskosität der flüssigen Phase ab. Durch Wahl der Mengenverhältnisse und geeigneter Flüssigkomponenten wird die Viskosität der Paste auf Werte zwischen 50 und 200 Pas eingestellt. (Gemessen mit einem Platte/Platte- Rotationsviskosimeter bei einer Scherrate von 1s⁻¹.)

Sofern Ausgangsmaterialien mit wesentlich größeren Teilchendurchmessern verarbeitet werden sollen, werden die Komponenten nach dem Vermischen noch einem Mahlprozeß unterworfen. Prinzipiell ist es bekannt, Pasten anorganischer Stoffe in organischen Lösungsmitteln durch nasses Vermahlen in Mühlen mit hohen Scherkräften herzustellen (US-A-4 115 308). Schwierigkeiten bereiten jedoch die hohen Temperaturen, die bei diesem Mahlverfahren im Mahlgut auftreten. Dies gilt besonders für temperaturempfindliche Gemische aus Perverbindungen und oxidierbarem Material. Für die Herstellung der erfindungsgemäßen Zubereitungen wird deshalb ein Verfahren bevorzugt, bei dem die Komponenten der Zubereitung, nachdem sie gemischt worden sind, mit Hilfe einer Dreiwalze gemahlen werden. In diesem Aggregat wird die Mischung der Komponenten zwischen Walzen hindurchgeführt, die ohne oder mit geringem freien Walzenspalt mit unterschiedlicher Umfangsgeschindigkeit gegeneinander laufen. Da die Walzen gekühlt werden können, erreicht das Mahlgut nie Temperaturen, die die Stabilität gefährden könnten. Sofern erforderlich, kann der Durchgang durch das Walzenaggregat ein- oder mehrmals wiederholt werden, bis die gewünschte Korngröße der Feststoffe erreicht ist. Unter Umständen kann es auch zweckmäßig sein, dem Vermahlen in der Dreiwalze noch einen Homogenisierschritt nachzuschalten, für den sich übliche Mischgeräte bewährt haben. Hier ist allerdings ebenfalls auf die Vermeidung zu hoher Temperaturen zu achten. Die fertige Paste wird vorzugsweise in Tuben oder Kartuschen aus Kunststoff abgefüllt.

Bevorzugtes Anwendungsgebiet der neuen Zubereitungen ist die Textilwäsche sowohl im Haushalt als auch im Gewerbe. Auf Grund der pastösen Konsistenz lassen sich die Zubereitungen sowohl von Hand als auch mit Hilfe geeigneter Apparaturen maschinell sehr leicht dosieren. Dabei wird die Einsatzmenge meist so gewählt, daß in der Waschflotte zwischen 30 und 300 ppm an Aktivsauerstoff aus Perboratmonohydrat vorliegen. Neben der Anwendung als Bleichmittel können die Zubereitungen aber auch als Oxidationsmittel für andere Zwecke Verwendung finden, beispielsweise zur Entwicklung von Oxidationsfarbstoffen oder zur Desinfektion.

### Beispiele

1. Ein Gemisch aus 1180 g Perboratmonohydrat (Aktivsauerstoffgehalt 15,3 %), 800 g Dehydol ^{(R)} LS 3 (Kokosalkohol C₁₂/₁₄ + 3 Ethylenoxid) und 20 g Natriumseife von gesättigten Talgfettsäuren wurden in einem Lödigemischer 5 Minuten vermengt. Anschließend wurde das Gemisch einer Dreiwalze (Typ WDLH/300, Firma Lehmann, Aalen, DE) zugeführt und zweimal in dieser Apparatur gemahlen. Die Teilchengröße der Feststoffe in der gebildeten Suspension wurde mit Hilfe eines Teilchengrößenanalysators (Helos Sympatec) bestimmt. 90 Gew.-% der Teilchen wiesen einen Durchmesser unterhalb von 20 »m auf. Die Viskosität der Paste betrug 50 Pas, gemessen bei 25 °C mit Hilfe eines Rotationsviskosimeters vom Typ Platte/Platte (Typ Carri-Med CS-Rheometer) bei einer Scherrate von 1s⁻¹.
2. - 7. Die Herstellungen dieser Zubereitungen erfolgte in der gleichen Weise wie in Beispiel 1 angegeben. Die Zusammensetzungen der Ausgangsmischungen ergeben sich aus Tabelle 1.

**Tabelle 1**

| (Gehalte in Gew.-%) | Beispiele | | | | | |
|---|---|---|---|---|---|---|
| | 2 | 3 | 4 | 5 | 6 | 7 |
| Perboratmonohydrat (Qualität 40, Degussa) | 65 | 65 | 60 | 59,5 | 59 | 59,5 |
| Dehydol ^{(R)}LS 3 | 16 | | | | | |
| Dehydol ^{(R)}LT 7 (Kokosalkohol C₁₂-C₁₈ + 7 EO (Henkel)) | 15 | 35 | 40 | 40 | 40 | 30 |
| Na-Seife von hydrierten Talgfettsäuren | | | | 0,5 | 1,0 | 0,5 |
| Paraffinöl (Kp 340 -495 °C) | 4 | | | | | 10 |

Bei allen Suspensionen lag der Anteil der Teilchen unter 50 »m bei über 98 Gew.-%, der Anteil der Teilchen unter 20 »m bei über 90 Gew.-%. Alle Pasten wiesen nach der Herstellung Viskositäten von etwa 50 Pas (25 °C) auf.

Sämtliche Zubereitungen zeigten im Lagertest keine Gasentwicklung bei 20 bzw. 40 °C innerhalb von 6 Wochen. Die Viskosität änderte sich innerhalb dieser Zeit nicht wesentlich. Sämtliche Zubereitungen ließen sich leicht dosieren und lösten sich schnell in kaltem Wasser.

## Patentansprüche

1. Im wesentlichen nichtwäßrige Zubereitung von Perboratmonohydrat in einem flüssigen Medium, das überwiegend aus nichtionischen Tensiden vom Typ der Additionsprodukte aus Ethylenoxid und langkettigen gesättigten Alkoholen mit 12 bis 18 C-Atomen besteht, dadurch gekennzeichnet, daß die Zubereitung eine Viskosität zwischen 50 und 200 Pas, gemessen um 25°C mit einem Platte/Platte-Rotationsviskosimeter bei einer Scherrate von 1s⁻¹, einen Wassergehalt unter 3 Gew.-% und einen Gehalt an Perboratmonohydrat von 40 bis 70 Gew.-% aufweist.

2. Zubereitung nach Anspruch 1, bei der das flüssige Medium überwiegend oder vollständig aus Additionsprodukten aus 2 bis 7 Mol Ethylenoxid und Alkoholen mit 12 bis 18 C-Atomen besteht.

3. Zubereitung nach einen der Ansprüche 1 oder 2 mit einem Gehalt von 50 bis 65 Gew.-% Perboratmonohydrat.

4. Zubereitung nach einem der Ansprüche 1 oder 2, die zusätzlich bis zu 10 Gew.-%, vorzugsweise 3 bis 10 Gew.-% einer weiteren organischen Flüssigkeit, ausgewählt aus der Gruppe Paraffinöl, Polypropylenglykol, Propylencarbonat, Ethanol, Isopropanol und deren Mischungen enthält.

5. Zubereitung nach einem der Ansprüche 1 oder 2, die zusätzlich bis zu 10 Gew.-%, vorzugsweise 2 bis 10 Gew.-% an weiteren Wirk- und Hilfsstoffen enthält.

6. Zubereitung nach Anspruch 5, wobei die Wirk- und Hilfsstoffe ausgewählt sind aus der Gruppe Vergrauungsinhibitoren, optische Aufheller, wasserfreie anorganische Salze, Schwermetallkomplexbildner, Seifen und deren Mischungen.

7. Zubereitung nach einem der Ansprüche 1 oder 2, in denen die suspendierten Feststoffe zu mehr als 90 Gew.-% als Teilchen mit einer Größe unterhalb 50 »m, vorzugsweise 25 »m vorliegen.

8. Verfahren zur Herstellung einer pastösen Zubereitung nach einem der Ansprüche 1 oder 2, bei dem sämtliche Komponenten der Zubereitung gemischt und dann ein oder mehrmals in einem Walzenstuhl zwischen Walzen mit unterschiedlicher Umfangsgeschwindigkeit gemahlen werden.

9. Verfahren nach Anspruch 8, bei dem sich an die Verarbeitung in der Dreiwalze eine Homogenisierung in einer Mischapparatur anschließt.

10. Verwendung einer Zubereitung nach einem der Ansprüche 1 oder 2 als Bleichmittel, Oxidationsmittel oder Desinfektionsmittel.

## Claims

1. A substantially non-aqueous preparation of perborate monohydrate in a liquid medium which consists predominantly of nonionic surfactants in the form of addition products of ethylene oxide and long-chain saturated alcohols containing 12 to 18 carbon atoms, characterized in that the preparation has a viscosity of 50 to 200 Pas, as measured at 25°C with a plate/plate rotational viscosimeter at a shear rate of 1 s⁻¹, and has a content of perborate monohydrate of 40 to 70% by weight.

2. A preparation as claimed in claim 1, in which the liquid medium consists predominantly or completely of addition products of 2 to 7 moles of ethylene oxide and C₁₂₋₁₈ alcohols.

3. A preparation as claimed in claim 1 or 2 containing 50 to 65% by weight of perborate monohydrate.

4. A preparation as claimed in claim 1 or 2 additionally containing up to 10% by weight and preferably 3 to 10% by weight of another organic liquid selected from the group consisting of paraffin oil, polypropylene glycol, propylene carbonate, ethanol, isopropanol and mixtures thereof.

5. A preparation as claimed in claim 1 or 2 additionally containing up to 10% by weight and preferably 2 to 10% by weight of other active substances and auxiliaries.

6. A preparation as claimed in claim 5, in which the active substances and auxiliaries are selected from the group consisting of redeposition inhibitors, optical brighteners, anhydrous inorganic salts, heavy metal complexing agents, soaps and mixtures thereof.

7. A preparation as claimed in claim 1 or 2, in which more than 90% by weight of the suspended solids are present as particles below 50 »m and preferably 25 »m in size.

8. A process for the production of the paste-form preparation claimed in claim 1 or 2, in which all the components of the preparation are mixed and the resulting mixture is ground one or more times in a roll stand between rollers rotating at different peripheral speeds.

9. A process as claimed in claim 8, in which processing in the three-roll stand is followed by homogenization in a mixer.

10. The use of the preparation claimed in claim 1 or 2 as a bleaching agent, oxidizing agent or disinfectant.

## Revendications

1. Préparation essentiellement non aqueuse de monohydrate de perborate dans un milieu liquide, qui est constituée principalement par des agents tensioactifs non ioniques du type des produits d'addition d'oxyde d'éthylène et d'alcools saturés à longues chaînes contenant de 12 à 18 atomes de carbone, caractérisée en ce que la préparation présente une viscosité entre 50 et 200 Pa.s, mesurée à 25°C avec un viscosimètre rotatif à plateau/plateau avec une vitesse de cisaillement de 1 s⁻¹, une teneur en eau inférieure à 3% en poids et une teneur en monohydrate de perborate de 40 à 70% en poids.

2. Préparation selon la revendication 1, dans laquelle le milieu liquide est constitué principalement ou complètement par des produits d'addition de 2 à 7 moles d'oxyde d'éthylène et d'alcools contenant de 12 à 18 atomes de carbone.

3. Préparation selon l'une quelconque des revendications 1 ou 2, possédant une teneur de 50 à 65% en poids de monohydrate de perborate.

4. Préparation selon l'une quelconque des revendications 1 ou 2, qui contient, en outre, jusqu'à 10% en poids, de préférence de 3 à 10% en poids d'un autre liquide organique choisi parmi le groupe comprenant l'huile de paraffine, le polypropylèneglycol, le carbonate de propylène, l'éthanol, l'isopropanol et leurs mélanges.

5. Préparation selon l'une quelconque des revendications 1 ou 2, qui contient, en outre, jusqu'à 10% en poids, de préférence de 2 à 10% en poids d'autres substances actives et auxiliaires.

6. Préparation selon la revendication 5, caractérisé en ce que les substances actives et auxiliaires sont choisies parmi le groupe comprenant des inhibiteurs du grisonnement, des agents de blanchiment optiques, des sels inorganiques anhydres, des formateurs de complexes de métaux lourds, des savons et leurs mélanges.

7. Préparation selon l'une quelconque des revendications 1 ou 2, dans laquelle les substances solides en suspension sont présentes à concurrence de plus de 90% en poids sous forme de particules possédant une dimension inférieure à 50 »m, de préférence de 25 »m.

8. Procédé pour la formulation d'une préparation pâteuse selon l'une quelconque des revendications 1 ou 2, dans lequel on mélange tous les composants de la préparation et ensuite, on procède à un broyage à une ou plusieurs reprises dans un moulin à cylindres entre des cylindres tournant avec une vitesse périphérique différente.

9. Procédé selon la revendication 8, dans lequel fait suite au traitement dans le mécanisme à trois cylindres, une homogénéisation dans un appareil de mélange.

10. Utilisation d'une préparation selon l'une quelconque des revendications 1 ou 2, comme agent de blanchiment, comme agent d'oxydation ou comme désinfectant.
